(19) Europäisches Patentamt
European Patent Office
Office européen des brevets

(11) Veröffentlichungsnummer: **0 064 689**
**B1**

(12) # EUROPÄISCHE PATENTSCHRIFT

(45) Veröffentlichungstag der Patentschrift: **20.11.86**

(51) Int. Cl.[4]: **C 08 L 69/00**, C 08 L 67/02

(21) Anmeldenummer: **82103696.9**

(22) Anmeldetag: **30.04.82**

(54) **Thermoplastische Formmassen auf Basis von Polycarbonat, Polyalkylenterephthalat und gegebenenfalls einem oder mehreren Polymerisaten.**

(30) Priorität: **12.05.81 DE 3118697**

(43) Veröffentlichungstag der Anmeldung:
**17.11.82 Patentblatt 82/46**

(45) Bekanntmachung des Hinweises auf die Patenterteilung:
**20.11.86 Patentblatt 86/47**

(84) Benannte Vertragsstaaten:
**DE FR GB IT NL SE**

(56) Entgegenhaltungen:
**AT - B - 351 267**
**DE - A - 2 329 585**
**DE - A - 2 439 342**
**DE - A - 2 643 757**
**DE - A - 2 704 875**
**DE - B - 2 343 609**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Nouvertné, Werner, Dr., Scheiblerstrasse 95, D-4150 Krefeld (DE)**
Erfinder: **Serini, Volker, Dr., Scheiblerstrasse 81, D-4150 Krefeld (DE)**
Erfinder: **Neuray, Dieter, Dr., Sebastian-Kneipp-Weg 6, D-4150 Krefeld (DE)**
Erfinder: **Binsack, Rudolf, Dr., Bethelstrasse 4a, D-4150 Krefeld (DE)**
Erfinder: **Gehrke, Hans-Georg, Ing.-grad., Schlehdornweg 29, D-5068 Odenthal (DE)**
Erfinder: **Rempel, Dieter, Dr., Max-Beckmann-Strasse 35, D-5090 Leverkusen 1 (DE)**
Erfinder: **Krishnan, Sivaram, Dr., Sachsenstrasse 12, D-4130 Moers (DE)**

**EP 0 064 689 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen, die mindestens ein aromatisches Polycarbonat, mindestens ein Polyalkylenterephthalat und gegebenenfalls ein oder mehrere Polymerisate enthalten.

Thermoplatische Formmassen auf Basis von Polycarbonat, Polyalkylenterephthalat und gegebenenfalls Pfropfpolymerisat sind bekannt; vgl. z.B. DE-A-2 622 414 (= US-A-4 044 073), DE-B-1 187 793 (= US-A-3 218 372), DE-B-2 343 609 (= US-A-3 864 428), EP-A-0 020 605 und 0 025 920. Sie sollen sich vor allem durch gute Verarbeitbarkeit, gute Verträglichkeit mit anderen Zusätzen und hohe Schlagzähigkeit auszeichnen.

Obwohl die genannten Formmassen viele positive Eigenschaften besitzen, werden sie manchen speziellen Anforderungen nicht gerecht. Bei längerer Temperaturbelastung neigen daraus hergestellte – insbesondere dünne – Formkörper zu Verzugserscheinungen, die sie für wärmebeständige Teile, z.B. Geräteteile im Motorraum von Kraftfahrzeugen oder in temperaturbelasteten Haushaltsgeräten, unbrauchbar erscheinen lassen.

Es war daher Aufgabe der Erfindung, Formmassen auf Basis von Polycarbonat und Polyalkylenterephthalat bereitzustellen, die sich für diese Zwecke besser eignen, die bekannt guten physikalischen und chemischen Eigenschaften von Polycarbonat/Polyalkylenterephthalat-Mischungen aber weitgehend behalten.

Überraschenderweise wurde nun gefunden, dass Polycarbonat/Polyalkylenterephthalat-Mischungen, deren Polycarbonatanteil ganz oder teilweise aus o,o,o',o'-Tetramethylbisphenol-Polycarbonat besteht, den gestellten Anforderungen in hervorragender Weise gerecht werden. Insbesondere erscheint erstaunlich, dass bereits sehr kleine Mengen Tetramethylbisphenol-Polycarbonat auf das Verzugsverhalten ausserordentlich positiv wirken.

Gegenstand der Erfindung sind thermoplastische Formmassen aus:

A. 1 bis 99, vorzugsweise 20 bis 80, insbesondere 30 bis 60, Gew.-Teilen Polyalkylenterephthalat;
B. 1 bis 99, vorzugsweise 20 bis 80, insbesondere 40 bis 70, Gew.-Teilen aromatisches Polycarbonat und
C. 0 bis 30, vorzugsweise 1 bis 20, insbesondere 3 bis 12, Gew.-Teilen Polymerisat mit einer Glasübergangstemperatur von unter −20 °C,

wobei sich die Komponenten A, B und C auf 100 Gew.-Teile ergänzen,
dadurch gekennzeichnet, dass das Polycarbonat B zu 2 bis 20 Gew.-% aus o,o,o',o'-Tetramethylbisphenol-Polycarbonat besteht.

Polyalkylenterephthalate A im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate A lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate A können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure und Cyclohexandiessigsäure.

Die bevorzugten Polyalkylenterephthalate A können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von

Propandiol-1,3, 2-Ethylpropandiol-1,3,
Neopentylglykol, Pentan-diol-1,5,
Hexandiol-1,6, Cyclohexan-dimethanol-1,4,
3-Methylpentandiol-2,4, 2-Methylpentandiol-2,4,
2,2,4-Trimethylpentandiol-1,3 und -1,6,
2-Ethylhexandiol-1,3, 2,2-Diethylpropandiol-1,3,
Hexandiol-2,5, 1,4-Di-(β-hydroxyethoxy)-benzol,
2,2-Bis-(4-hydroxycyclohexyl)-propan,
2,4-Dihydroxy-1,1,3,3-tetramethyl-cyclobutan,
2,2-Bis-(3-β-hydroxyethoxyphenyl)-propan und
2,2-Bis-(4-hydroxypropoxyphenyl)-propan
(DE-A-2 407 674, 2 407 776 und 2 715 932).

Die Polyalkylenterephthalate A können durch Einbau relativ kleiner Mengen 3- oder 4-wertiger Alkohole oder 3- oder 4-basischer Carbonsäuren, wie sie z.B. in der DE-A-1 900 270 und der US-A-3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate A, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate A sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25 °C.

Unter aromatischen Polycarbonaten B im Sinne dieser Erfindung werden Homopolycarbonate, Copolycarbonate und Mischungen dieser Polycarbonate verstanden, denen z. B. mindestens eines der folgenden Diphenole zugrunde liegt:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole
sowie deren kernalkylierte und kernhalogenierte Derivate. Diese und weitere geeignete Diphenole sind z. B. in US-A-3 028 365, 3 275 601, 3 148 172, 3 062 781, 2 991 273, 3 271 367, 2 999 835, 2 970 131 und 2 999 846, in DE-A-1 570 703, 2 063 050, 2 063 052, 2 211 956 und 2 211 957, in FR-A-1 561 518 und in der Monographie von H. Schnell, «Chemistry and Physics of Polycarbonates», Interscience Publishers, New York, 1964, beschrieben.

Bevorzugte Diphenole sind z. B.
4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z. B.
2,2-Bis-(4-hydroxyphenyl)-propan,
2,2-Bis(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Bevorzugte o,o,o',o'-Tetramethylbisphenol-Polycarbonate sind z. B.
Bis-(3,5-dimethyl-4-hydroxyphenyle),
Bis-(3,5-dimethyl-4-hydroxyphenyl)-alkane,
Bis-(3,5-dimethyl-4-hydroxyphenyl)-cycloalkane,
Bis-(3,5-dimethyl-4-hydroxyphenyl)-sulfide,
Bis-(3,5-dimethyl-4-hydroxyphenyl)-ether,
Bis-(3,5-dimethyl-4-hydroxyphenyl)-ketone,
Bis-(3,5-dimethyl-4-hydroxyphenyl)-sulfoxide,
α,α'-Bis-(3,5-Dimethyl-4-hydroxyphenyl)-diisopropylbenzole
sowie deren kernhalogenierte Derivate, insbesondere
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
Bis-(3,5-dimethyl-4-hydroxyphenyl)-sulfon.

Besonders bevorzugte o,o,o',o'-Tetramethylbisphenol-Polycarbonate sind solche, deren Diphenolkomponente allein aus 2,2-Bis-(3,5-dimethyl-4-hydroxyphenyl)-propan besteht; gegebenenfalls können 0,5 bis 20, vorzugsweise 1 bis 7, Gew.-% dieser Verbindung durch 1,1,3,4,6-Pentamethyl-3-(3,5-dimethyl-4-hydroxyphenyl)-indan-5-ol der Formel (I)

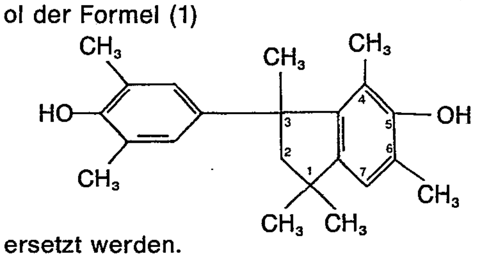 (I)

ersetzt werden.

Die aromatischen Polycarbonate B können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxygruppen, verzweigt sein.

Die aromatischen Polycarbonate B sollen in der Regel mittlere Molekulargewichte $\bar{M}_w$ von 10 000 bis über 200 000, vorzugsweise von 20 000 bis 80 000 haben, ermittelt durch Messungen der relativen Viskosität in Dichlormethan bei 25 °C und einer Konzentration von 0,5 Gew.-%.

Den hochmolekularen Polycarbonaten mit $\bar{M}_w$ von 10 000 bis 200 000 können auch kleine Anteile niedermolekularer Polycarbonate, z. B. mit einem mittleren Polykondensationsgrad von 2 bis 20, zugemischt sein.

Zur Einstellung des Molekulargewichts $\bar{M}_w$ der Polycarbonate B werden in bekannter Weise Kettenabbrecher, wie beispielsweise Phenol, Halogenphenole oder Alkylphenole, in den berechneten Mengen eingesetzt.

Die aromatischen Polycarbonate B bestehen in der Regel zu 1 bis 100 Gew.-% aus Tetramethylbisphenol-Carbonat-Einheiten, bezogen auf die Summe aller Bisphenol-Carbonat-Einheiten; d. h. Mischungen und Cokondensate werden rechnerisch gleich behandelt, so dass ein Polycarbonat aus je 50 Gew.-% Bisphenol-A-Carbonat- und Tetramethylbisphenol-A-Carbonat-Einheiten wie eine Mischung aus je 50 Gew.-% Bisphenol-A-Polycarbonat und Tetramethylbisphenol-A-Polycarbonat betrachtet wird.

Der Gehalt der erfindungsgemässen Mischungen an Tetramethylbisphenol-Polycarbonat bewirkt einen geringen Verzug aus den Formmassen hergestellter Formkörper.

Die Polymerisate C umfassen Copolymerisate – insbesondere Pfropfcopolymerisate – mit kautschukelastischen Eigenschaften, die im wesentlichen aus mindestens 2 der folgenden Monomeren erhältlich sind: Chloropren, Butadien, Isopren, Isobuten, Styrol, Acrylnitril, Ethylen, Propylen, Vinylacetat und (Meth-)Acrylsäureester mit 1 bis 18 C-Atomen in der Alkoholkomponente; also Polymerisate, wie sie z. B. in «Methoden der Organischen Chemie», (Houben-Weyl), Bd. 14/1, Georg Thieme Verlag, Stuttgart 1961, S. 393–406 und in

C.B. Bucknall, «Toughened Plastics», Appl. Science Publishers, London 1977, beschrieben sind. Bevorzugte Polymerisate C besitzen einen Gelgehalt von über 20, vorzugsweise über 40, Gew.-%.

Bevorzugte Polymerisate C sind Ethylen/Vinylacetat-Copolymerisate mit 15 bis 45 Gew.-% Vinylacetat-Copolymerisate mit 15 bis 45 Gew.-% Vinylacetatresten und Schmelzindices von nicht fliessfähig bis 1000, vorzugsweise von 0,1 bis 20, gemessen bei 190 °C und 2,16 kp Belastung nach DIN 53 735.

Bevorzugte Polymerisate C sind z.B. die sogenannten EPM- bzw. EPDM-Kautschuke, in denen das Gew.-Verhältnis von Ethylen- zu Propylenresten im Bereich von 40:60 bis 90:10, vorzugsweise 40:60 bis 65:35, liegt.

Die Mooney-Viskositäten ($ML_{1+4}$/100 °C) der unvernetzten EPM- bzw. EPDM-Kautschuke liegen zwischen 25 bis 100, vorzugsweise zwischen 35 bis 90. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt: konjugierte Diene, z.B. Isopren und Butadien, und nicht-konjugierte Diene mit 5 bis 24 C-Atomen, z.B.
1,4-Pentadien, 2,4-Hexadien, 1,5-Hexadien,
2,5-Dimethyl-1,5-hexadien und 1,4-Octadien;
cyclische Diene, z.B.
Cyclopentadien, Cyclohexadien, Cyclooctadien und
Dicyclopentadien; Alkenylnorbornen,
z.B.
5-Ethyliden-2-norbornen, 5-Butyliden-2-norbornen,
2-Methallyl-5-norbornen,
2-Isopropenyl-5-norbornen und Tricyclodiene,
z.B.
3-Methyl-tricyclo-(5,2,1,0,2,6)-3,8-decadien.
Bevorzugt seien die nicht-konjugierten Diene Hexadien-1,5, Ethyliden-norbornen oder Dicyclopentadien angeführt. Der Diengehalt im EPDM beträgt vorzugsweise 0,5 bis 10 Gew.-%.

Derartige EPM- bzw. EPDM-Kautschuke sind z.B. in der DE-A-2 808 709 beschrieben.

Bevorzugte Polymerisate C sind auch selektiv hydrierte Blockcopolymerisate eines vinylaromatischen Monomeren (X) und eines konjugierten Diens (Y) vom X–Y-Typ. Diese Blockcopolymerisate können nach bekannten Verfahren hergestellt werden.

Im allgemeinen kann für die Herstellung der geeigneten X–Y-Blockcopolymerisate aus Styrol, α-Methylstyrol, Vinyltoluol und aus konjugierten Dienen, wie Butadien und Isopren, die für die Herstellung von Styrol-Dien-Blockcopolymerisaten verwendete Technologie benutzt werden, die in «Encyclopedia of Polymer Science and Technology», Bd. 15, Interscience, N.Y. (1971) auf den Seiten 508 ff. beschrieben ist. Die selektive Hydrierung kann auf an sich bekannten Wegen durchgeführt werden und bedeutet, dass die ethylenischen Doppelbindungen im wesentlichen vollständig hydriert werden, wobei die aromatischen Doppelbindungen im wesentlichen unbeeinflusst bleiben.

Derartige selektiv hydrierte Blockcopolymerisate werden z.B. in DE-A-3 000 282 beschrieben.

Bevorzugte Polymerisate C sind z.B. mit Styrol und/oder Acrylnitril und/oder (Meth)-Acrylsäurealkylestern gepfropfte Polybutadiene, Butadien/Styrol-Copolymerisate und Poly-(meth)acrylsäureester, z.B. Copolymerisate aus Styrol oder Alkylstyrol und konjugierten Dienen (schlagfestes Polystyrol), d.h. Copolymerisate der in DE-A-1 694 173 (= US-A-3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in DE-A-2 348 377 (≙ US-A-3 919 353) beschrieben sind.

Besonders bevorzugte Polymerisate C sind z.B. ABS-Polymerisate (sowohl Misch- als auch Pfropftypen), wie sie z.B. in DE-A-2 035 390 (≙ US-A-3 644 574) oder in DE-A-2 248 242 (≙ GB-A-1 409 275) beschrieben sind.

Besonders bevorzugte Polymerisate C sind z.B. Pfropfpolymerisate, die durch Pfropfreaktion von

I. 10 bis 40, vorzugsweise 10 bis 35, insbesondere 15 bis 25, Gew.-%, bezogen auf Pfropfprodukt, mindestens eines (Meth-)Acrylsäureesters und/oder eines Gemisches aus
10 bis 35, vorzugsweise 20 bis 35, Gew.-%, bezogen auf Gemisch, Acrylnitril und 65 bis 90, vorzugsweise 65 bis 80, Gew.-%, bezogen auf Gemisch, Styrol auf

II. 60 bis 90, vorzugsweise 65 bis 90, insbesondere 75 bis 85, Gew.-%, bezogen auf Pfropfprodukt, eines Butadien-Polymerisats mit mindestens 70 Gew.-%, bezogen auf II, Butadienresten als Pfropfgrundlage erhältlich ist,
wobei vorzugsweise der Gelanteil der Pfropfgrundlage II $\geq$ 70% (in Toluol gemessen), der Pfropfgrad G 0,15 bis 0,55 und der mittlere Teilchendurchmesser $d_{50}$ des Pfropfpolymerisats C 0,2 bis 0,6, vorzugsweise 0,3 bis 0,5 µm betragen.

(Meth-)Acrylsäureester I sind Ester der Acrylsäure bzw. Methacrylsäure und einwertiger Alkohole mit 1 bis 8 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1–4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpfropfen, werden erfindungsgemäss unter Pfropfpolymerisaten auch solche produkte verstanden, die neben den eigentlichen Pfropfpolymerisaten auch Homo- und Copolymerisate der eingesetzten Pfropfmonomeren I enthalten.

Der Pfropfgrad G bezeichnet das Gew.-Verhältnis von aufgepfropften Pfropfmonomeren zu Pfropfgrundlage und ist dimensionslos.

Die mittlere Teilchengrösse $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782–796) oder mittels Elektronenmikroskopie und anschliessende Teilchenauszählung (G. Kämpf, H. Schuster, Angew. Makromolekulare Chemie 14, (1970), 111–129) oder mittels Lichtstreuungsmessungen.

Besonders bevorzugte Polymerisate C sind z.B. auch Pfropfpolymerisate aus

a) 25 bis 98 Gew.-%, bezogen auf C, Acrylatkautschuk mit einer Glasübergangstemperatur unter −20 °C als Pfropfgrundlage und

b) 2 bis 75 Gew.-%, bezogen auf C, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25 °C hätten, als Pfropfmonomere.

Die Acrylatkautschuke (a) der Polymerisate C sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke – wie auf Seite 18 beschrieben – ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$–$C_8$-Alkylester, beispielsweise Methyl-, Ethyl-, Butyl-, Octyl- und 2-Ethylhexylester; Halogenalkylester, vorzugsweise Halogen-$C_1$–$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf $< 1$ Gew.-% der Pfropfgrundlage (a) zu beschränken.

Bevorzugte «andere» polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$–$C_6$-alkylether. Bevorzugte Acrylatkautschuke als Pfropfgrundlage (a) sind Emulsionspolymerisate, die einen Gelgehalt von $\geq 60$ Gew.-% aufweisen.

Der Gelgehalt der Pfropfgrundlage (a) wird bei 25 °C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-% bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate C auf Basis von Polyacrylsäureestern seien nachfolgend zusammengefasst:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d.h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gew.-Verhältnis 90:10 bis 50:50.

Solche Pfropfpolymerisate C auf Basis von Polyacrylsäureestern werden z.B. in DE-B-2 444 584 (≙ US-A-4 022 748) und in DE-A-2 726 256 (≙ US-A-4 096 202) beschrieben.

Besonders vorteilhafte Pfropfpolymerisate dieser Art erhält man, wenn man 2 bis 20, vorzugsweise 2 bis 15, Gew.-%, bezogen auf C, Monomer (b) auf 80 bis 98, vorzugsweise 85 bis 97, Gew.-%, bezogen auf C, des vollständig gebrochenen und in Wasser aufgeschlämmten Latex von (a) in Abwesenheit von Suspendiermittel aufpfropft. Das anfallende pulverförmige Pfropfpolymerisat kann anschliessend getrocknet und im gewünschten Verhältnis unter Einwirkung von Scherkräften mit den anderen Komponenten so homogenisiert werden, dass die mittlere Teilchengrösse $d_{50}$ von C in der erfindungsgemässen Mischung 0,05 bis 3, vorzugsweise 0,1 bis 2, insbesondere 0,2 bis 1 µm beträgt.

Der Begriff «in Abwesenheit von Suspendiermittel» bedeutet die Abwesenheit von Stoffen, die nach Art und Menge die Pfropfmonomeren (b) in der wässrigen Phase suspendieren könnten. Die Definition schliesst die Anwesenheit von Stoffen nicht aus, die z.B. bei der Herstellung einer gepfropften Pfropfgrundlage (a) suspendierend gewirkt haben; in derartigen Fällen muss das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten. Es muss darauf geachtet werden, dass die Pfropfmonomeren (b) in der wässrigen Phase keine (stabile) Emulsion ergeben.

Ein derart in Abwesenheit von Suspendiermittel hergestelltes Pfropfpolymerisat C ist als Bestandteil der erfindungsgemässen Formmassen in den anderen Harzkomponenten zu einer aussergewöhnlich niedrigen Teilchengrösse verteilbar, die relativ unverändert auch längere Verarbeitungszeiten bei höherer Temperatur übersteht.

Der Begriff «aussergewöhnlich niedrige Teilchengrösse» meint, dass Anzahl, Form und Grösse der einzusetzenden Pfropfpolymerisatteilchen mit Anzahl, Form und Grösse der in die geschmolzenen anderen Harzkomponenten eingebrachten Pfropfpolymerisatteilchen auch nach dem Homogenisieren im wesentlichen noch übereinstimmen.

Als Pfropfgrundlage (a) können auch solche Acrylatkautschuke verwendet werden, die als wässrige Emulsion (Latex) anfallen und deren Latexpartikel 1 bis 20 Gew.-%, vorzugsweise 1 bis 10 Gew.-%, bezogen auf (a), bereits in wässriger Emulsion aufgepfropfte Monomere enthalten, deren Homo- bzw. Copolymerisate Glastemperaturen $> 0\,°C$ aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z.B. durch Emulsionspolymerisaten oder Emulsionspfropfpolymerisaten hergestellt. Man kann sie aber auch so herstellen, dass man einen Acrylatkautschuk in Lösung oder Masse herstellt, dann die Pfropfmonomeren aufpfropft und anschliessend diese Kautschuke in eine wässrige Emulsion, die sich für weitere Pfropfverfahren eignet, überführt.

Als Pfropfgrundlagen (a) für Acrylatkautschuke dieser besonderen Ausführungsform eignen sich also vorzugsweise neben den auf Seite 18 aufgezählten Polymerisaten auch in wässriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Die erfindungsgemässen Formmassen können zur Erhöhung der Benzinfestigkeit bis zu 5 Gew.-Teile Ethylenhomo- bzw. -copolymerisat enthalten. Ethylencopolymerisate in diesem Sinne sind Polyethylene, deren Reste neben Ethylenresten bis zu 30 Gew.-%, bezogen auf Ethylencopolymerisat, aus Resten anderer copolymerisierbarer Monomerer bestehen. Andere copolymerisierbare Monomere für die Herstellung dieser Ethylencopolymerisate sind z.B. (Meth-)Acrylsäure und die oben für die Herstellung von Pfropfgrundlage und Pfropfauflage für Polymerisat C aufgezählten Monomeren.

Die erfindungsgemässen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten Formmassen können bis zu 60 Gew.-%, bezogen auf die verstärkte Formmasse, Füll- und/oder Verstärkungsstoffe enthalten. Bevorzugte Verstärkungstoffe sind Glasfasern. Bevorzugte Füllstoffe, die auch verstärkend wirken können, sind Glaskugeln, Glimmer, Silikate, Quarz, Talkum, Titandioxid und Wollastonit.

Die mit Flammschutzmitteln ausgerüsteten Polyester-Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Ausserdem enthalten sie in der Regel einen Synergisten, wie z.B. Antimontrioxid.

Die Herstellung der Formmassen kann in den üblichen Mischaggregaten, wie Walzen, Knetern, Ein- und Mehrwellenextrudern, erfolgen.

Die erfindungsgemässen Formmassen lassen sich zu Formkörpern verarbeiten, die auch bei längerer Temperaturbelastung einen ausserordentlich geringen Verzug aufweisen.

Wenn auch in den meisten Fällen sämtliche Harzkomponenten zweckmässigerweise in einem einzigen Schritt gemischt werden, kann es manchmal auch empfehlenswert sein, zuerst eine oder gar zwei Komponenten wegzulassen und erst zu einem späteren Zeitpunkt zuzumischen.

Es wurde gefunden, dass Mischungen, die kein Polymerisat C enthalten, als «Zwischenprodukte» zur Herstellung der oben beschriebenen erfindungsgemässen Formmassen dienen können, aber auch selbst zu Formkörpern mit ausgezeichneten Eigenschaften verarbeitet werden können. Diese zeigen, verglichen mit Formkörpern aus erfindungsgemässen Mischungen, die Polymerisat C enthalten, geringere Zähigkeit, aber höhere

Wärmeformbeständigkeit und höhere Dauerwärmebeständigkeit.

Bevorzugte Formmassen dieser Art enthalten

A. 5 bis 95 Gew.-Teile Polyalkylenterephthalat und

B. 5 bis 95 Gew.-Teile aromatisches Polycarbonat, wobei sich die Komponenten A und B auf 100 Gew.-Teile ergänzen und das aromatische Polycarbonat B zu 2 bis 20, vorzugsweise 3 bis 15, Gew.-% aus o,o,o',o'-Tetramethylbisphenol-Polycarbonat besteht.

Weiterhin wurde gefunden, dass Mischungen aus Polyalkylenterephthalat und Tetramethylbisphenol-A-Polycarbonat enthaltendes Polycarbonat geeignete «Zwischenprodukte» für die oben beschriebenen erfindungsgemässen Formmassen sind, aber auch selbst zu sehr verzugsarmen, gegebenenfalls glasfaserverstärkten, Formkörpern mit hoher Wärmeformbeständigkeit und relativ geringem thermischem Ausdehnungskoeffizienten verarbeitet werden können.

Bevorzugte Formmassen dieser Art enthalten

A. 5 bis 95, vorzugsweise 20 bis 80, insbesondere 50 bis 70, Gew.-Teile Polyalkylenterephthalat und

B. 5 bis 95, vorzugsweise 30 bis 80, insbesondere 30 bis 50, Gew.-Teile Polycarbonat, wobei das Polycarbonat zu 2 bis 20 Gew.-% aus o,o,o',o'-Tetramethylbisphenol-Polycarbonat besteht.

Diese Formmassen eignen sich beispielsweise hervorragend zur Herstellung von Scheinwerferreflektoren.

Die in den nachfolgenden Beispielen genannten Teile sind Gewichtsteile; Prozentangaben beziehen sich auf das Gewicht.

Beispiele

Verwendete Komponenten:

I. Polycarbonat aus Bisphenol-A, Phenol und Phosgen, relative Viskosität 1. 285, gemessen in Dichlormethan bis 25 °C in 0,5%iger Lösung.

II. Polycarbonat aus o,o,o',o'-Tetramethylbisphenol-A, Phenol und Phosgen, relative Viskosität 1.29, gemessen in Dichlormethan bei 25 °C in 0,5%iger Lösung.

III. Polybutylenterephthalat mit einer Intrinsic-Viskosität von 1.18 dl/g, gemessen in Phenol/o-Dichlorbenzol (Gew.-Verhältnis 1:1) bei 25 °C im Ubbelohde-Viskosimeter.

IV. Polybutylenterephthalat mit einer Intrinsic-Viskosität von 0,92 dl/g, gemessen wie III.

V. Polyethylenterephthalat mit einer Intrinsic-Viskosität von 0,78 dl/g, gemessen wie III.

VI. Terpolymerisat aus Ethylen, Acrylsäure und tert.-Butylacrylat im Gew.-Verhältnis 89/4/7 mit einem Schmelzindex von 6–8 g/10 min. (gemessen bei 190 °C und 2.16 kp Belastung nach DIN 53 735) und einer Dichte von 0,924 g/cm³ (gemessen nach DIN 53 479).

VII. Pfropfpolymerisat, 80% Pfropfgrundlage aus vernetztem Polybutadien (Gelgehalt über 70%, gemessen in Toluol) und 20% Pfropfauflage aus Methylmethacrylat.

VIII. Pfropfpolymerisat, 80% Pfropfgrundlage aus vernetztem Polybutadien (Gelgehalt über 70%, gemessen in Toluol) und 20% Pfropfauflage aus 72 Teilen Styrol und 28 Teilen Acrylnitril.

IX. Pfropfpolymerisat mit Kern-Mantel-Struktur der folgenden Zusammensetzung, ausgedrückt in Gewichtsverhältnissen der es bildenden Monomeren: n-Butylacrylat/Butandiol-1,3-diacrylat/Diallylmaleat/Methylmethacrylat = 79,2/0,4/0,4/20,0.

X. Pfropfpolymerisat mit Kern-Mantel-Struktur, hergestellt nach dem folgenden Mehrstufenverfahren.

1. Herstellung der Pfropfgrundlage

1.1 Herstellung eines Polybutadienlatex

In einem Reaktor wird unter Rühren eine Emulsion folgender Zusammensetzung bei 65 °C bis zum vollständigen Monomerumsatz innerhalb von ca. 22 Stunden polymerisiert.

100 Teile Butadien,
1,8 Teile Na-Salz der disproportionierten Abietinsäure,
0,257 Teile Natriumhydroxid,
0,3 Teile n-Dodecylmercaptan,
1,029 Teile Na-Ethylendiamintetraacetat,
0,023 Teile Kaliumpersulfat und
176 Teile Wasser.

Es wird ein Latex erhalten, der Polybutadienteilchen eines mittleren Durchmessers ($d_{50}$) von 0,1 µm in einer Konzentration von ca. 36% enthält.

1.2 Herstellung von Acrylatkautschuk, der Polydienkerne enthält.

In einem Reaktor wird unter Rühren bei 63 °C folgende Mischung vorgelegt:

200 Teile Latex 1.1,
5000 Teile Wasser,
14 Teile Kaliumpersulfat,
0,9124 Teile Triallylcyanurat und
399,09 Teile n-Butylacrylat.

Innerhalb von 5 Stunden werden bei 63 °C folgende Mischungen in den Reaktor getrennt eindosiert:

Mischung 1:
90 Teile $C_{14}$–$C_{18}$-Alkylsulfonat-Na und
11900 Teile Wasser.

Mischung 2:
23,09 Teile Triallylcyanurat und
10101 Teile n-Butylacrylat.

Anschliessend lässt man 2 Stunden bei 65 °C auspolymerisieren. Die gebildeten Polymerisate besitzen Gelgehalte von 85–95% und mittlere Teilchendurchmesser ($d_{50}$) von 0,5 µm (Polymerisat-Gehalt im Latex: 38%).

2.1 Herstellung der Emulsionspfropfpolymerisate

2.1.1 Emulsionspfropfpolymerisat aus 90% Acrylatkautschuk 1.2 und 10% Styrol + Acrylnitril.

In einem Reaktor werden vorgelegt:

3296 Teile Latex 1.2,
1,5 Teile Kaliumpersulfat und
90 Teile Wasser.

Bei 65 °C werden folgende Mischungen getrennt in den Reaktor eindosiert:

Mischung 1:
39 Teile Acrylnitril und
100 Teile Styrol,

Mischung 2:
150 Teile Wasser und
4 Teile $C_{14}$–$C_{18}$-Alkylsulfonat-Na.

Anschliessend lässt man 4 Stunden bei 65 °C auspolymerisieren (Polymerisat-Gehalt im Latex: 37,8%).

2.2 Herstellung des Pfropfpolymerisates C aus dem Emulsionspropfpolymerisat.

In einem Reaktor werden bei 70 °C vorgelegt:
18 800 Teile Wasser und
240 Teile Bittersalz.

Unter Rühren lässt man nun innerhalb von 2 Stunden 11 200 Teile Latex 2.1.1 unter Rühren in den Reaktor einlaufen.

Nach Beendigung des Zulaufens wird 1 Teil Kaliumpersulfat in den Reaktor gegeben; anschliessend werden 148 Teile Acrylnitril und 381 Teile Styrol in 1 Stunde gleichmässig unter Rühren eindosiert. Anschliessend rührt man die Aufschlämmung 1 Stunde bei 90 °C. Dann wird das Polymerisat C isoliert.

Herstellung der Formmassen:

Auf einem Zweiwellenextruder wurden die Komponenten unter Stickstoffatmosphäre aufgeschmolzen (Gew.-Teile s. nachfolgende Tabelle) und homogenisiert. Die Zylindertemperatur wurde so gewählt, dass die in der Tabelle angegebene Massetemperatur gewährleistet war. Der Schmelzstrang der erfindungsgemässen Mischungen wurde vor dem Austritt aus der Düse entgast, in Wasser abgekühlt, granuliert und getrocknet. Die Verarbeitung erfolgte auf einer Spritzgussmaschine.

Tabelle 1

| Beispiel | Komponenten [Gew.-Teile] | | | | | | | | | | Massetemp. | | Formtemp. |
|---|---|---|---|---|---|---|---|---|---|---|---|---|---|
| | | | | | | | | | | | Extruder | Spritzguss | |
| | I | II | III | IV | V | VI | VII | VIII | IX | X | [°C] | [°C] | [°C] |
| 1 | 54 | 4 | 35 | – | – | 2 | – | – | 5 | – | 288 | 270 | 60 |
| 2 | 54 | 4 | 35 | – | – | 2 | – | 5 | – | – | 278 | 270 | 60 |
| 3 | 54 | 4 | 35 | – | – | – | – | 7 | – | – | 285 | 270 | 60 |
| 4 | 50 | 8 | – | – | 35 | – | – | 7 | – | – | 289 | 270 | 60 |
| 5 | 54 | 4 | 20 | – | 15 | – | 7 | – | – | – | 289 | 270 | 60 |
| 6 | 54 | 4 | 35 | – | – | – | – | – | – | 7 | 288 | 290 | 60 |

Alle Formkörper zeigten, verglichen mit solchen, die Komponente II nicht enthielten, einen deutlich geringeren Verzug.

**Patentansprüche**

1. Thermoplastische Formmassen aus
A. 1 bis 99 Gew.-Teilen Polyalkylenterephthalat,
B. 1 bis 99 Gew.-Teilen aromatisches Polycarbonat und
C. 0 bis 30 Gew.-Teilen Polymerisat mit einer Glasübergangstemperatur von unter −20 °C, wobei sich die Komponenten A, B und C auf 100 Gew.-Teile ergänzen,

dadurch gekennzeichnet, dass das Polycarbonat B zu 2 bis 20 Gew.-% aus o,o,o′,o′-Tetramethylbisphenol-Polycarbonat besteht.

2. Formmassen nach Anspruch 1, dadurch gekennzeichnet, dass sie
5 bis 95 Gew.-Teile A, und
5 bis 95 Gew.-Teile B enthalten.

3. Formmassen nach Ansprüchen 1, dadurch gekennzeichnet, dass sie
5 bis 95 Gew.-Teile A,
5 bis 95 Gew.-Teile B und
1 bis 30 Gew.-Teile C enthalten.

4. Formmassen nach Anspruch 3, dadurch gekennzeichnet, dass sie
20 bis 80 Gew.-Teile A,
20 bis 80 Gew.-Teile B und
1 bis 20 Gew.-Teile C enthalten.

5. Formmassen nach Ansprüchen 1 bis 4, dadurch gekennzeichnet, dass sie glasfaserverstärkt sind.

6. Formmassen nach Ansprüchen 1 und 3 bis 5, dadurch gekennzeichnet, dass das Polymerisat C ein ABS-Pfropfpolymerisat ist, das durch Pfropfreaktion von

I. 10 bis 40 Gew.-%, bezogen auf Pfropfprodukt, mindestens eines (Meth-)Acrylsäureesters und/oder eines Gemisches aus 10 bis 35 Gew.-%, bezogen auf Gemisch Acrylnitril und 65 bis 90 Gew.-%, bezogen auf Gemisch, Styrol auf

II. 60 bis 90 Gew.-%, bezogen auf Pfropfprodukt, eines Butadien-Polymerisats mit mindestens 70 Gew.-%, bezogen auf II, Butadienresten als Pfropfgrundlage erhältlich ist.

7. Formmassen nach Ansprüchen 1 und 3 bis 5, dadurch gekennzeichnet, dass das Polymerisat C ein Pfropfpolymerisat ist aus

a) 25 bis 98 Gew.-%, bezogen auf Pfropfpolymerisat, Acrylatkautschuk mit einer Glasübergangstemperatur unter −20 °C als Pfropfgrundlage und

b) 2 bis 75 Gew.-%, bezogen auf Pfropfpolymerisat, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25 °C hätten, als Pfropfmonomere.

8. Formmassen nach Ansprüchen 1–7, dadurch gekennzeichnet, dass das Polyalkylenterephthalat A Polyethylenterephthalat und/oder Polybutylenterephthalat ist.

9. Formmassen nach Ansprüchen 1–8, dadurch gekennzeichnet, dass das aromatische Polycarbonat B teilweise aus 2,2-Bis-(3,5-dimethyl-4-hydroxyphenyl)-propan-Polycarbonat besteht.

**Claims**

1. Thermoplastic moulding compositions of
A. 1 to 99 parts by weight of polyalkylene terephthalate,
B. 1 to 99 parts by weight of an aromatic polycarbonate and
C. 0 to 30 parts by weight of a polymer with a glass transition temperature of below $-20\,°C$, the quantities of components A, B and C totalling 100 parts by weight,

characterised in that polycarbonate B consists, to an extent of 2 to 20% by weight, of o,o,o′,o′-tetramethyl bisphenol polycarbonate.

2. Moulding compositions according to Claim 1, characterised in that they contain
5 to 95 parts by weight of A and
5 to 95 parts by weight of B.

3. Moulding compositions according to Claims 1, characterised in that they contain
5 to 95 parts by weight of A,
5 to 95 parts by weight of B and
1 to 30 parts by weight of C.

4. Moulding compositions according to Claim 3, characterised in that they contain
20 to 80 parts by weight of A,
20 to 80 parts by weight of B and
1 to 20 parts by weight of C.

5. Moulding compositions according to Claims 1 to 4, characterised in that they are glass-fibre-reinforced.

6. Moulding compositions according to Claims 1 and 3 to 5, characterised in that polymer C is an ABS graft polymer which is obtainable by a grafting reaction of
I. 10 to 40% by weight, based on the graft product, of at least one (meth-)acrylic acid ester and/or mixture of
10 to 35% by weight, based on the mixture, of acrylonitrile and 65 to 90% by weight, based on the mixture, of styrene, on to
II. 60 to 90% by weight, based on the graft product, of a butadiene polymer containing at least 70% by weight, based on II, of butadiene radicals, as the graft substrate.

7. Moulding compositions according to Claims 1 and 3 to 5, characterised in that polymer C is a graft polymer of
a) 80 to 98% by weight, based on the graft polymer, of an acrylate rubber with a glass transition temperature of below $-20\,°C$ as the graft substrate and
b) 2 to 20% by weight, based on the graft polymer, of at least one polymerisable ethylenically unsaturated monomer of which the homo- or copolymers formed in the absence of (a) would have a glass transition temperature of higher than $25\,°C$, an the graft monomer.

8. Moulding compositions according to Claims 1–7, characterised in that the polyalkylene terephthalate A is polyethylene terephthalate and/or polybutylene terephthalate.

9. Moulding compositions according to Claims 1–8, characterised in that the aromatic polycarbonate B consists partly of 2,2-bis-(3,5-dimethyl-4-hydroxyphenyl)-propane polycarbonate.

**Revendications**

1. Mélanges à mouler thermoplastiques formés de
A. 1 à 99 parties en poids de polytéréphtalate d'alkylène,
B. 1 à 99 parties en poids de polycarbonate aromatique et
C. 0 à 30 parties en poids d'un produit de polymérisation ayant une température de transition vitreuse inférieure à $-20\,°C$, les composants A, B et C se complétant à 100 parties en poids,

caractérisés en ce que le polycarbonate B consiste en polycarbonate de o,o,o′,o′-tétraméthylbisphénol en proportion allant de 2 à 20% en poids.

2. Mélanges à mouler suivant la revendication 1, caractérisés en ce qu'ils contiennent
5 à 95 parties en poids de A, et
5 à 95 parties en poids de B.

3. Mélanges à mouler suivant la revendication 1, caractérisés en ce qu'ils contiennent
5 à 95 parties en poids de A,
5 à 95 parties en poids de B et
1 à 30 parties en poids de C.

4. Mélanges à mouler suivant la revendication 3, caractérisés en ce qu'ils contiennent
20 à 80 parties en poids de A,
20 à 80 parties en poids de B et
1 à 20 parties en poids de C.

5. Mélanges à mouler suivant les revendications 1 à 4, caractérisés en ce qu'ils sont renforcés à la fibre de verre.

6. Mélanges à mouler suivant les revendications 1 et 3 à 5, caractérisés en ce que le produit de polymérisation C est un polymère greffé ABS qui peut être obtenu par réaction de greffage de
I. 10 à 40% en poids, par rapport au produit greffé, d'au moins un ester d'acide (méth)acrylique et/ou un mélange
de 10 à 35% en poids, par rapport au mélange, d'acrylonitrile et
de 65 à 90% en poids, par rapport au mélange, de styrène
II. 60 à 90% en poids, par rapport au produit greffé, d'un produit de polymérisation du butadiène avec au moins 70% en poids, par rapport à II, de restes butadiène comme substrat de greffage.

7. Mélanges à mouler suivant les revendications 1 et 3 à 5, caractérisés en ce que le produit de polymérisation C est un produit de polymérisation par greffage de

a) 80 à 98% en poids, par rapport au polymère greffé, de caoutchouc acrylate ayant une température de transition vitreuse inférieure à −20 °C comme substrat de greffage et

b) 2 à 20% en poids, par rapport au polymère greffé, d'au moins un monomère polymérisable à insaturation éthylénique, dont des homopolymères ou, respectivement, des copolymères formés en l'absence de (a) auraient une température de transition vitreuse supérieure à 25 °C, comme monomères à greffer.

8. Mélanges à mouler suivant les revendications 1 à 7, caractérisés en ce que le polytéréphtalate d'alkylène A est le polytéréphtalate d'éthylène et/ou le polytéréphtalate et butylène.

9. Mélanges à mouler suivant les revendications 1 à 8, caractérisés en ce que le polycarbonate aromatique B est partiellement formé de 2,2-bis-(3,5-diméthyl-4-hydroxyphényl)-propane-polycarbonate.